(19) Europäisches Patentamt
European Patent Office
Office européen des brevets

(11) **EP 1 738 886 A1**

(12) # DEMANDE DE BREVET EUROPEEN

(43) Date de publication:
**03.01.2007 Bulletin 2007/01**

(51) Int Cl.:
**B28D 5/04** (2006.01)  **B28D 1/08** (2006.01)
**B28D 1/10** (2006.01)  **B23D 57/00** (2006.01)

(21) Numéro de dépôt: **05013776.9**

(22) Date de dépôt: **27.06.2005**

(84) Etats contractants désignés:
**AT BE BG CH CY CZ DE DK EE ES FI FR GB GR HU IE IS IT LI LT LU MC NL PL PT RO SE SI SK TR**
Etats d'extension désignés:
**AL BA HR LV MK YU**

(71) Demandeur: **HCT Shaping Systems S.A.**
**1033 Cheseaux-sur-Lausanne (CH)**

(72) Inventeurs:
• **Rosset, Jean-Marc**
**1422 Les Tuileries (CH)**
• **Foretay, Alain**
**1041 Poliiez-Pittet (CH)**

(74) Mandataire: **Micheli & Cie SA**
**122, rue de Genève,**
**CP 61**
**1226 Thonex-Genève (CH)**

(54) **Procédé de détection d'un dysfonctionnement dans un dispositif de sciage par fil et dispositif pour la mise en oeuvre dudit procédé**

(57)     L'invention concerne un procédé de détection des dysfonctionnements, en particulier la détection de la rupture d'un fil, dans un dispositif de sciage par fils. Le procédé consiste à injecter un signal alternatif dans la nappe de fils (4) du dispositif de sciage et de mesurer les variations de tension ou de courant aux bornes de la nappe de fils (4). Dans une variante, on mesure les variations de la tension induite par la nappe de fils (4) formant circuit primaire dans une antenne (9) formant le circuit secondaire d'un système résonant.

L'invention a également pour objet un dispositif pour la mise en oeuvre du procédé de détection.

## Fig.2

**Description**

La présente invention concerne un procédé de détection de dysfonctionnement tel que la rupture d'un fil, le déraillement du fil ou la mise à la terre du fil de sciage dans un dispositif de sciage par fils. L'invention concerne également un dispositif pour détecter de tels dysfonctionnements dans un dispositif de sciage par fils.

Pour réaliser une découpe très fine en tranche de dimensions normalisées de blocs ou lingots de matière, par exemple du silicium, on utilise des dispositifs de sciage par fils dans lesquels le fil de coupe atteint des vitesses importantes, de l'ordre de 5 à 25 m/s. Dans certaines conditions, comme par exemple en présence d'une irrégularité dans la matière à scier, on constate des ruptures du fil de coupe qu'il est nécessaire de pouvoir identifier et détecter de façon fiable et rapide pour éviter de perturber les opérations de production.

Les dispositifs de sciage par fils auxquels il est fait référence dans la présente demande comprennent généralement au moins une zone de sciage dans laquelle un fil est enroulé sur au moins deux guide-fil de manière à former au moins une nappe de fils. Le lingot de matière à scier est agencé sur un support mobile qui peut être amené contre la nappe de fils en mouvement. Dans une variante, le lingot de matière est fixe sur un support adéquat et c'est la nappe de fil qui est agencée de manière à pouvoir se déplacer en direction du lingot de matière à scier. Le fil de coupe est susceptible d'être déplacé selon un mouvement alternatif et/ou continu entre une zone d'entrée du fil alimenté par une bobine émettrice de fil et une zone de sortie vers une bobine réceptrice. Entre ces deux zones, le fil est tendu avec une tension prédéterminée.

Pour faciliter les opérations de coupe d'un lingot de matière et assurer un bon état de surface, un liquide abrasif, qui est par exemple dans le cas d'un lingot de silicium composé d'huile et de carbure de silicium, dénommé slurry est déversé dans la zone de sciage et sur la nappe de fils pendant les opérations de coupe.

Afin d'obtenir un processus de coupe continu, de manière à minimiser les arrêts de la machine, il est souhaitable de détecter le plus rapidement possible et de manière certaine tout dysfonctionnement du dispositif de sciage par fils afin de pouvoir prendre les mesures correctives adaptées.

Parmi les dysfonctionnements usuels, on peut citer outre la rupture d'un fil dans la nappe de fils, le déraillement du fil de l'un des moyens permettant d'amener le fil dans la zone de coupe, ou le cas dans lequel le fil creuse l'un desdits moyens sur lequel il est monté et provoque un court-circuit. Les moyens permettant d'amener le fil dans la zone de coupe sont généralement constitués de poulies, de cabestans ou de guides fils.

L'utilisation de capteurs mécaniques ou optiques pour détecter la rupture d'un fil ou d'autres dysfonctionnements est mal adaptée à l'environnement de travail, en effet le liquide abrasif ou slurry déversé durant l'opération de coupe perturbe le fonctionnement de tels capteurs et risque de les endommager.

Une solution connue consiste à injecter un courant continu dans la nappe de fils et à mesurer la tension aux bornes de la nappe de fils. Lors de la rupture du fil, l'impédance ou résistance électrique de la nappe de fils varie et provoque une variation de la tension mesurée aux bornes de la nappe.

En mesurant les variations de tension ou de courant dans la nappe de fils on détecte des dysfonctionnements tels que le déraillement d'un fil sur une poulie ou la creusure d'un guide fil par le fil de coupe. Dans les cas précités, le fil entre en contact avec des parties métalliques de la machine ce qui provoque un court circuit et donc une variation de la tension électrique mesurée aux bornes de la nappe de fils.

Cette méthode ne s'avère pas fiable en revanche pour détecter les ruptures du fil. En effet, le courant circule non seulement dans la nappe de fils mais également dans le lingot de matière à scier et/ou dans le liquide abrasif, de sorte que la résistance électrique de la nappe de fils varie selon que la nappe de fils est en contact avec la matière à scier et le slurry ou non. Il est en conséquence difficile d'attribuer de manière fiable une variation de la tension à une rupture de fil lors de l'injection d'un courant continu.

La présente invention a pour but de remédier à ces inconvénients, et elle est caractérisée à cet effet par les caractéristiques figurant dans la revendication indépendante 1 en ce qui concerne le procédé de détection d'un dysfonctionnement, en particulier la rupture d'un fil et par les caractéristiques énoncées à la revendication 6 pour le dispositif permettant la détection de la rupture d'un fil dans un dispositif de sciage par fils.

En particulier le procédé de détection selon la revendication 1 permet de garantir la détection à 100% des ruptures du fil par l'utilisation d'un courant alternatif injecté dans la nappe de fils.

Dans une variante du procédé de détection, un signal alternatif est injecté dans la nappe de fils qui se comporte alors comme le circuit primaire d'un système résonant et l'on mesure ensuite les variations de la tension induite dans une antenne réceptrice formant un circuit secondaire.

L'utilisation d'un courant alternatif dans la nappe de fil et l'ajustement du circuit secondaire à la fréquence de résonance du signal injecté dans le circuit primaire, permet d'obtenir une grande fiabilité dans la détection de plusieurs types de dysfonctionnements dans la nappe de fils tels que la rupture d'un fil ou la présence d'un court-circuit.

Selon un mode d'exécution favorable, le signal haute fréquence injecté dans le circuit primaire formé de la nappe de fils est constitué d'un signal comportant au moins deux composantes de fréquences différentes.

La présente invention concerne également un dispositif permettant la mise en oeuvre du procédé précité pour détecter efficacement la rupture d'un fil dans un dispositif de sciage par fils. Ce dispositif est constitué d'un générateur de signal pour injecter un signal à haute fréquence dans la nappe de fils, et d'un circuit de mesure qui permet de détecter les variations de tension ou du courant induit.

Dans une première forme d'exécution, la nappe de fils constitue le circuit de mesure et dans une seconde forme d'exécution, le circuit de mesure comporte une antenne réceptrice dont la fréquence de résonance est ajustée à la fréquence du signal injecté dans la nappe de fils du dispositif de sciage et un circuit permettant de traiter la tension induite dans l'antenne réceptrice par le circuit primaire.

Avantageusement, l'antenne formant le circuit secondaire sera placée à l'intérieur de la zone de coupe et de la nappe de fils.

D'autres avantages ressortent des caractéristiques exprimées dans les revendications dépendantes et de la description exposant ci-après l'invention plus en détail à l'aide de dessins qui représentent schématiquement et à titre d'exemple un mode d'exécution de l'invention.

La figure 1 représente schématiquement un dispositif de sciage par fils conventionnel.

La figure 2 illustre le schéma équivalent des circuits primaire et secondaire du système résonant utilisé pour la détection des dysfonctionnements selon l'invention.

La figure 3 montre la courbe de réponse en fréquence d'une antenne formant le circuit secondaire lorsque la nappe de fils est intacte et lorsque qu'un fil est rompu dans la nappe de fils.

La figure 4 illustre le signal qui représente la différence entre les deux signaux tracés à la figure 3.

La figure 5 est un exemple d'un circuit permettant de générer un signal alternatif dans la nappe de fils.

La figure 6 est une représentation du signal alternatif injecté dans la nappe de fils.

La figure 7 est un schéma du circuit électronique pour détecter les variations de tension induites dans l'antenne lors de la rupture d'un fil.

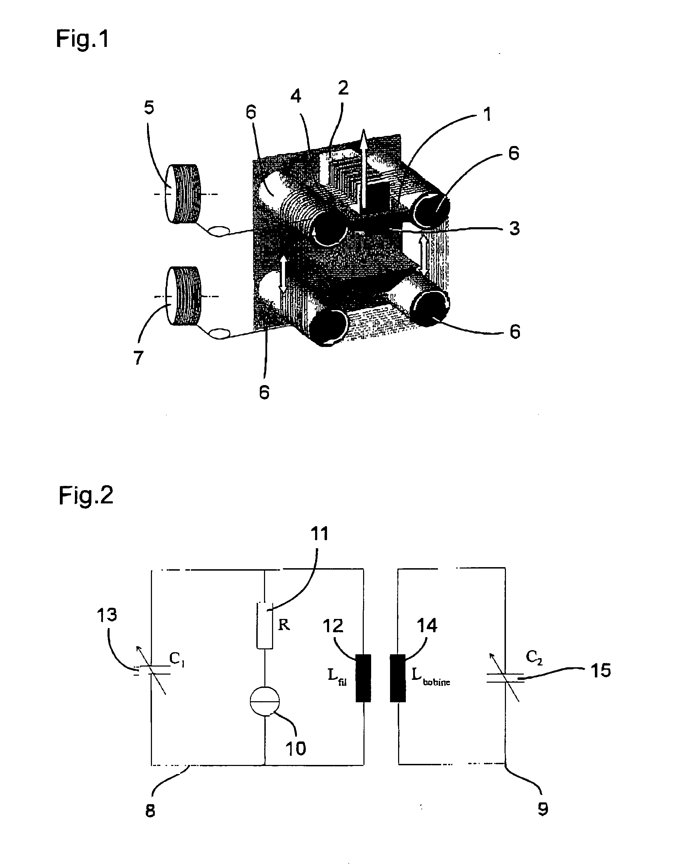

La figure 1 illustre schématiquement un dispositif de sciage par fils qui présente une zone de sciage 1 dans laquelle un lingot 2 de matériau à scier, par exemple du silicium, est supporté par une table 3 qui peut être déplacée dans la direction d'une nappe de fils 4. La nappe de fils 4 est formée par l'enroulement multiple d'un fil débité d'une bobine émettrice 5 autour de plusieurs guide-fil G. A la sortie du dispositif de sciage, le fil usagé est récupéré sur une bobine réceptrice 7. Les deux bobines 5 et 7 sont entraînées par des moteurs (non représentés), les guide-fils peuvent également être entraînés par des moteurs. On notera que dans de tels dispositifs, le sciage du lingot 2 de matière peut être effectué par un mouvement alternatif et/ou continu de la nappe de fils 4.

Afin de détecter la rupture du fil dans un tel dispositif, on va utiliser les propriétés magnétiques et électriques du circuit constitué par la nappe de fils 4, de la matière à scier et du slurry. Un bref rappel de quelques propriétés électriques des conducteurs permettra de mieux appréhender la suite de la description.

L'impédance d'un conducteur électrique varie en fonction de la fréquence du courant qui le traverse. Cette variation est décrite par la fonction suivante :

$$Z = \sqrt{R^2 + \left(wL - \frac{1}{wC}\right)^2}$$

ou w = 2.π.f
avec :

Z : impédance [Ω]
R : résistance [Ω]
L : inductance [H]
C : capacité [F]
w : pulsation [rad/s]
f : fréquence [Hz]

Dans un conducteur électrique soumis à un courant continu, la densité du courant est répartie de manière uniforme dans le conducteur. En revanche lorsque l'on applique un courant alternatif à ce même conducteur, on constate que, plus la fréquence est élevée, plus le courant à tendance à circuler dans la périphérie du conducteur. La résistance d'un conducteur se calcule alors comme suit :

$$R = p\frac{l}{\pi.r^2}$$

Avec:

p : résistivité du conducteur [Ωm]
l : longueur du conducteur [m]
r ; rayon du conducteur [m]

Ce qui montre que lorsque la section d'un conducteur diminue, sa résistance augmente. Par ailleurs, la profondeur de pénétration du courant dans un conducteur est donnée par la formule suivante ;

$$d \sim \frac{1}{\sqrt{f}}$$

ce qui donne l'approximation plus générale:

$$R = p\frac{1}{2\pi r d} \sim \sqrt{f}$$

Des mesures d'impédance effectuées sur la nappe de fils seule, et comparées avec les mêmes mesures réalisées en présence d'un lingot de silicium et de slurry montrent qu'à partir d'une fréquence d'environ 150 kHz, l'impédance de la nappe de fils ne varie pas ou très peu que l'on soit en présence de matière à scier ou pas.

Ainsi, en injectant un signal à haute fréquence, à la place du courant continu dans la nappe de fils, on améliore sensiblement la détection des dysfonctionnements, en particulier la rupture du fil et la présence de court-circuits, car l'influence du lingot de matière à scier et du slurry devient négligeable. Une variation de la tension aux bornes de la nappe de fils ou du courant circulant dans la nappe de fils peut alors être attribuée de façon certaine à un dysfonctionnement.

Ainsi une première méthode de détection de dysfonctionnement dans un dispositif de sciage par fils consiste à injecter un courant alternatif à haute fréquence dans la nappe de fils et à mesurer les variations de tension aux bornes du circuit de mesure que constitue la nappe de fils. Lorsqu'un fil se rompt, la résistance de la nappe de fils varie et induit une variation de la tension qui peut être mesurée et attribuée à un dysfonctionnement.

Une variante du procédé de détection consiste à utiliser la nappe de fils comme le circuit primaire d'un système résonant et de mesurer le courant induit dans un circuit secondaire constitué d'une antenne réceptrice, placée dans la zone de coupe du dispositif de sciage. Lors de la rupture du fil, le signal induit dans le circuit secondaire va brusquement varier et sera facilement détecté.

En ajustant le circuit secondaire de façon à le faire résonner à la fréquence du courant injecté dans le circuit primaire, on garantit un gain maximum entre les deux circuits sur une plage de fréquence assez courte et ainsi une détection améliorée.

La figure 2 représente de façon schématique le circuit équivalent des circuits primaire 8 et secondaire 9. Le circuit primaire 8, constitué par la nappe de fils 4, comprend une source de courant 10 présentant une résistance interne 11 alimentant en parallèle une inductance 12 de valeur $L_{fil}$ et un condensateur variable 13 permettant d'ajuster la fréquence de résonance du circuit primaire 8.

Le circuit secondaire 9 utilisé pour la détection de la rupture du fil est composé d'une inductance 14, montée en parallèle avec un condensateur variable 15

La fréquence de résonance d'un tel circuit est donnée par la formule suivante :

$$Fres = \frac{1}{2\pi\sqrt{LC}}$$

ou L est l'inductance de la bobine 14
et C la capacité du condensateur 15

Pour déterminer la meilleure plage de fréquence à utiliser pour la détection des dysfonctionnements, des mesures ont été effectuées sur un dispositif de sciage qui présentait une nappe de fils possédant un pas entre les fils compris dans une plage de 0,1 mm à environ 5 mm pour une longueur totale de la nappe de fils de l'ordre de 4 mètres.

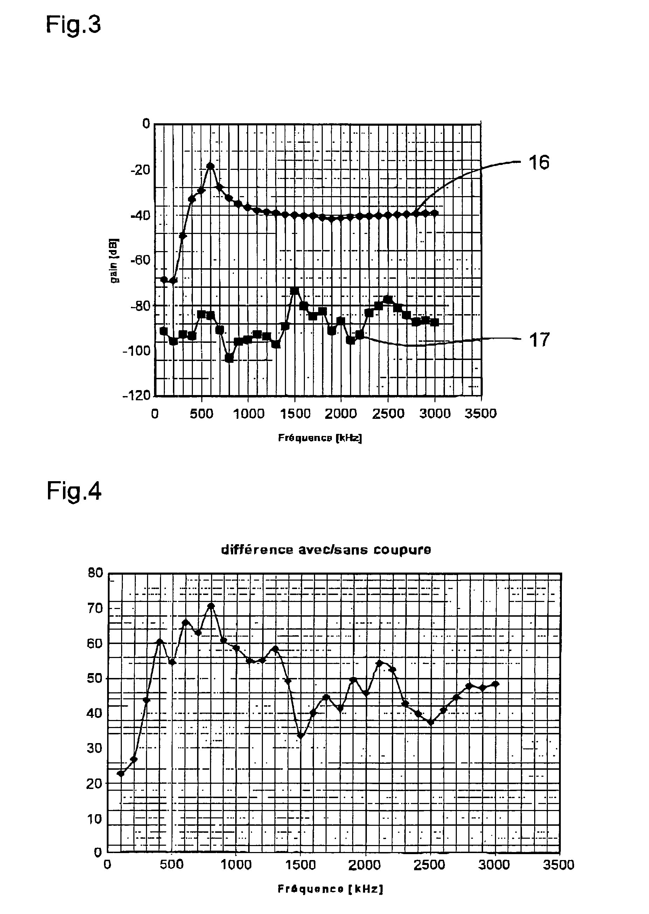

La figure 3 illustre la courbe de réponse en fréquence d'une antenne réceptrice constituée d'un noyau de ferrite autour duquel un conducteur est enroulé et dont le schéma équivalent est identique à celui du circuit secondaire 9 de la figure 2. La courbe supérieure 16 représente le gain du circuit en fonction de la fréquence lorsque le fil est intact alors que la courbe 17 représentée en position inférieure représente le gain du circuit lorsqu'un fil est coupé dans la nappe de fils.

La figure 4 illustre quant à elle la différence entre le signal obtenu par l'antenne réceptrice lorsque la nappe de fils est alimentée et lorsque l'un des fils de la nappe se rompt en fonction de la fréquence.

Ces mesures montrent que la meilleure plage de fréquence pour l'application de détection selon l'invention se situe entre 500kHz et 800kHz. Partant de ces résultats, la fréquence de résonance à été choisie arbitrairement à 600kHz.

Ainsi le procédé selon l'invention consiste à produire un signal alternatif dont la fréquence est comprise entre 500 et 800 khz, de préférence 600 kHz et à l'injecter dans la nappe de fils du dispositif de sciage. Ces valeurs de fréquence sont données à titre d'exemple et dans le cas ou l'on désire scier du silicium. Pour d'autres matériaux la plage de fréquence pourra être différente. La nappe de fils 4 se comporte alors comme le circuit primaire 8 d'un système résonant. Une antenne réceptrice formant un circuit secondaire 9 est agencée à proximité immédiate de la nappe de fils 4. Un circuit électronique intégré à l'antenne permet de détecter les variations de la tension induite dans le circuit secondaire par le circuit primaire. La comparaison entre la valeur du signal mesuré dans l'antenne réceptrice et un seuil pré-déterminé permet de détecter des dysfonctionnements du dispositif de sciage comme la rupture d'un fil ou la présence d'un court-circuit par exemple.

Pour obtenir un gain maximum entre le circuit primaire et le circuit secondaire, la fréquence de résonance du circuit secondaire 9 est ajustée à celle du signal injecté dans le circuit primaire.

Des mesures d'affaiblissement ont permis de déterminer que la position la plus favorable pour l'antenne réceptrice se situe au centre de la zone de coupe 1 et à l'intérieur de la nappe de fils 4. Elle peut néanmoins être située n'importe où à proximité immédiate de la zone de sciage, ceci au prix de performances moindres.

Un dispositif de détection destiné à équiper les machines de sciage par fils et permettant la mise en oeuvre du procédé décrit ci-dessus va maintenant être décrit plus en détail. Le dispositif de détection selon l'invention se compose d'une source de courant permettant de générer un signal alternatif à au moins une fréquence donnée et au moins un circuit de mesure permettant de mesurer les variations de la tension ou du courant dans la nappe de fils.

Dans une variante, le dispositif comporte une antenne réceptrice couplée à un circuit de détection pour mesurer les variations de tension induites dans l'antenne par le courant circulant dans la nappe de fils qui forme alors le circuit primaire d'un système résonant.

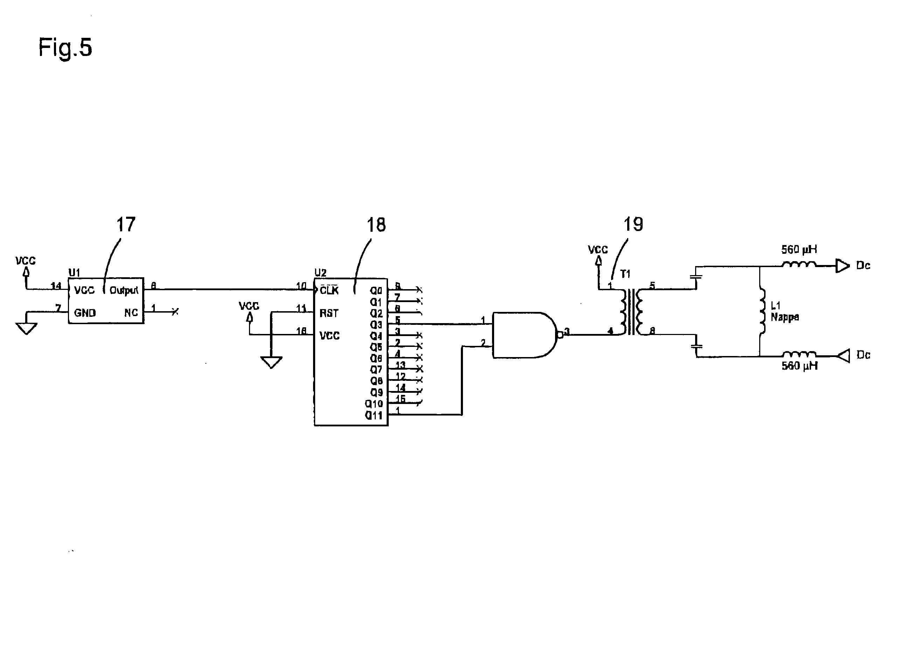

Les générateurs de signaux connus peuvent être utilisés pour injecter un signal dans la nappe fils selon le procédé objet de la présente invention. A titre d'exemple non limitatif, un circuit permettant de générer un signal à haute fréquence destiné à être injecté dans la nappe de fils 4 est illustré à la figure 5. Ce circuit comporte un oscillateur à quartz 17 suivi d'un diviseur de fréquence 18 et d'une porte NAND et d'un transformateur de séparation ou séparateur galvanique 19. Pour garantir un fonctionnement optimum, il est important que ce circuit soit flottant c'est-à-dire isolé galvaniquement.

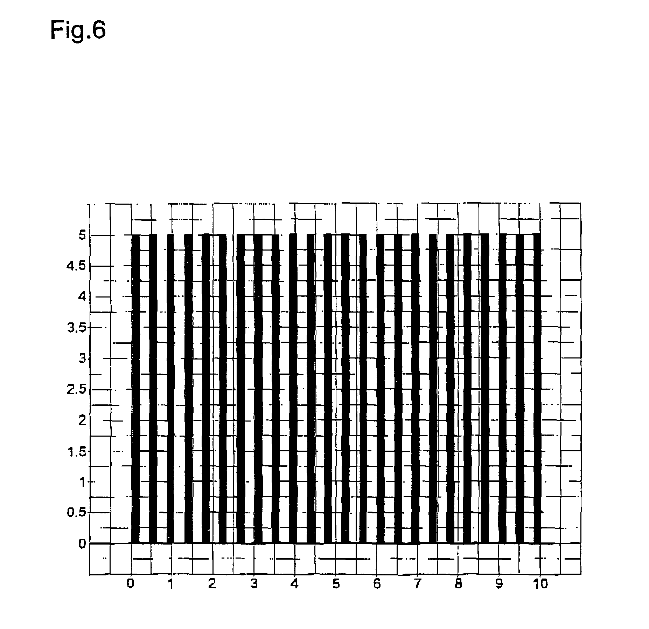

Le circuit de génération illustré à la figure 5 est conçu pour produire une fréquence de 600kHz sous 5V. Dans ce circuit, deux fréquences sont générées et les signaux sont multipliés ce qui donne le signal représenté à la figure 6. Ce signal, composé de deux fréquences, comprend une première composante à basse fréquence comprise dans une plage entre 2 Khz et 5 khz et une seconde composante à haute fréquence à 600kHz.

En injectant un train d'impulsion dans la nappe de fils plutôt qu'un signal de fréquence constante, les autres organes électriques et électroniques du dispositif de sciage sont moins perturbés. Il est évident que d'autres variantes peuvent être utilisées pour réaliser un circuit capable de générer un tel signal.

Dans une variante, le dispositif de détection selon l'invention comprend encore un circuit secondaire ou antenne réceptrice dont le schéma équivalent est représenté à la figure 2. Ce circuit comprend une inductance 14 ainsi qu'un condensateur 15 montés en parallèle. Les valeurs de l'inductance 14 et de la capacité 15 seront choisies de manière à ajuster la fréquence de résonance de ce circuit à la fréquence de résonance du circuit primaire constitué de la nappe de fils, dans le cas décrit on utilise une fréquence de 600 kHz. Pour réaliser cette antenne réceptrice, on peut utiliser un noyau en ferrite sur lequel un fil conducteur est entouré et un condensateur monté en parallèle.

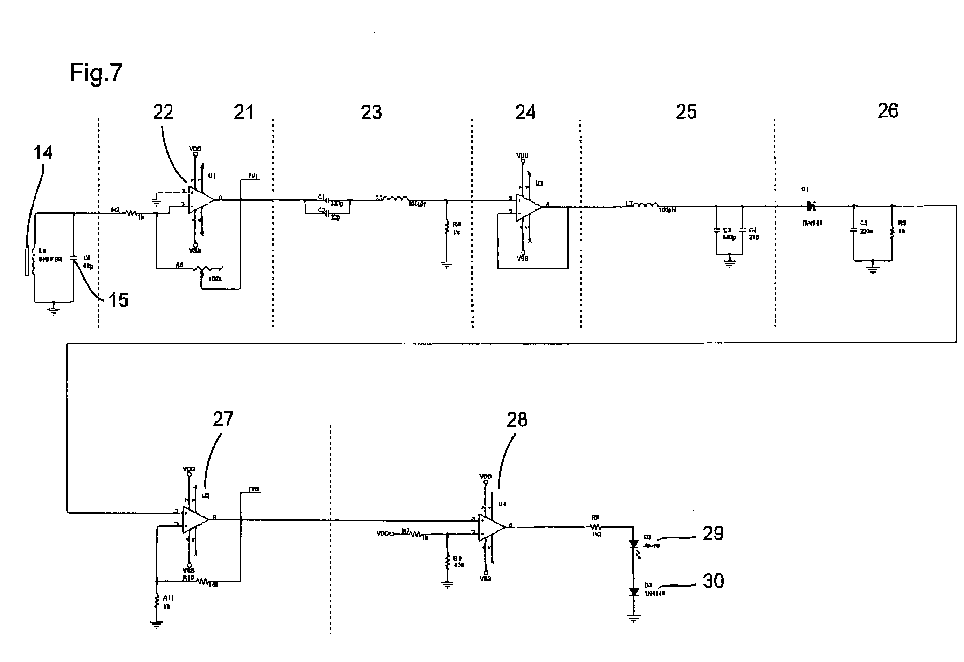

La figure 7 illustre le schéma électrique d'un circuit de détection qui, couplé à l'antenne réceptrice, permet de mesurer les variations de tension induite dans l'antenne ou circuit secondaire.

Le circuit illustré à la figure 7 se comporte comme un filtre passe bande très sélectif pour la fréquence de résonance choisie (600 kHz dans l'exemple). Le signal provenant de l'antenne 14,15 alimente un étage 21 dans lequel le signal est tout d'abord amplifié à l'aide d'un amplificateur inverseur à gain variable 22 puis passe à travers un filtre passe bande 23 dont la fréquence de coupure est ajustée à la valeur de la fréquence de résonance de l'antenne réceptrice, le signal passe ensuite à travers un suiveur de tension 24 et un filtre passe-bas 25 ayant un facteur de qualité important et dont la fréquence de coupure est également ajustée à la fréquence de résonance des circuits primaire et secondaire. Le signal est ensuite redressé grâce à un redresseur 26 puis amplifié à l'aide d'un amplificateur 27 non inverseur pour finalement alimenter une bascule 28 qui permet d'afficher l'état du signal à l'aide des diodes 29 30.

Ce dispositif est simple et peu onéreux à fabriquer et donne d'excellents résultats. Il sera en outre avantageusement conditionné dans un conteneur étanche pour résister aux conditions défavorables ou hostiles telles que celles trouvées dans la zone de coupe des machines à sciage par fils. L'antenne réceptrice munie de son circuit de détection sera de préférence agencée au centre de la zone de coupe sous la nappe de fils car c'est à cet endroit que le signal induit dans l'antenne par la nappe de fils est le plus fort. On peut toutefois prévoir de placer l'antenne réceptrice à un autre endroit tout en restant à proximité de la zone de coupe.

Dans l'exemple qui précède, on mesure une variation de la tension, soit dans la nappe de fils directement, soit dans l'antenne réceptrice située à proximité de zone de coupe, il est évident que l'un pourrait de façon équivalente, mesurer le courant circulant dans la nappe de fils ou le courant induit dans l'antenne réceptrice pour arriver aux mêmes résultats.

**Revendications**

1. Procédé de détection d'un dysfonctionnement, en particulier la rupture d'un fil dans un dispositif de sciage par fils du type comprenant au moins une zone de sciage (1) dans laquelle un fil est enroulé sur au moins deux guide-fil (6) de manière à former au moins une nappe de fils (4) déplaçable selon un mouvement continu ou alternatif et qui comporte un support (3) (3) agencé de manière à recevoir un lingot de matière (2), la nappe de fils 4 ou le support pouvant être déplacé de manière à amener le lingot contre la nappe de fils (4) en mouvement pour être scié, **caractérisé en ce que** l'on injecte un signal alternatif à haute fréquence dans la nappe de fils (4) et que l'on mesure les variations de ce signal électrique dans un circuit de mesure, les écarts détectés étant ensuite comparés avec un seuil pré-déterminé.

**2.** Procédé selon la revendication 1, **caractérisé en ce que** l'on mesure les variations du signal électrique directement dans la nappe de fils (4).

**3.** Procédé selon l'une des revendications précédentes, **caractérisé en ce que** l'on mesure la valeur du courant ou de la tension induite, par le circuit primaire constitué de la nappe de fils (4) dans une antenne formant circuit secondaire agencée dans la zone de coupe (1) du dispositif de sciage.

**4.** Procédé selon la revendication 3, **caractérisé par le fait que** le signal injecté dans la nappe de fils formant le circuit primaire est composé d'au moins un signal compris dans une plage de fréquence entre 500kHz et 800kHz de préférence 600kHz combiné à un signal dont la fréquence est comprise entre 2kHz et 5kHz.

**5.** Procédé selon la revendication 3 ou 4, **caractérisé en ce que** la fréquence de résonance de l'antenne (9) formant circuit secondaire correspond à la fréquence de résonance du signal injecté dans la nappe de fils (4).

**6.** Dispositif pour la détection d'un dysfonctionnement, en particulier la rupture d'un fil, dans un dispositif de sciage par fils du type comprenant au moins une zone de sciage (1) dans laquelle un fil est enroulé sur au moins deux guide-fil (6) de manière à former au moins une nappe de fils (4) déplaçable selon un mouvement continu et/ou alternatif et qui comporte un support mobile (3) agencé de manière à recevoir un lingot de matière (2) susceptible d'être déplacé contre la nappe de fils (4) en mouvement **caractérisé en ce qu'**il comporte un générateur de signal (10,11) permettant d'injecter un signal alternatif dans la nappe de fils (4), et au moins un circuit de mesure dans lequel les variations de tension ou de courant sont mesurées.

**7.** Dispositif selon la revendication 6, **caractérisé en ce que** le circuit de mesure est constitué par la nappe de fils (4).

**8.** Dispositif selon la revendication 6, **caractérisé en ce** le circuit de mesure comprend au moins une antenne (14,15) agencée à proximité de la zone de coupe (1) et couplée à un circuit de traitement du signal permettant de détecter les variations de la tension ou du courant induit dans l'antenne (14,15) par le circuit primaire formé de la nappe de fils (4).

**9.** Dispositif selon la revendication 8, **caractérisé par le fait que** l'antenne (14,15) formant le circuit secondaire est agencée au centre de la zone de sciage (1), sous la nappe de fils (4).

**10.** Dispositif selon l'une des revendications 8 à 9, **caractérisé en ce que** l'antenne est constituée d'un noyau de ferrite entouré d'un fil conducteur et d'un condensateur variable (15) pour permettre d'ajuster la fréquence de résonance de l'antenne à la fréquence du signal injecté dans la nappe de fils (4) formant le circuit primaire.

**11.** Dispositif selon l'une des revendications 8 à 10, **caractérisé en ce que** le circuit de détection couplé à l'antenne (14,15) comporte au moins un amplificateur (22,28) du signal et au moins un filtre passe bande (23,25) dont la fréquence de coupure correspond à la fréquence de résonance de l'antenne (14,15) et au moins une bascule (28) reliée à des moyens (29.30) d'affichage d'état.

Fig.1

Fig.2

# Fig.3

Fréquence [kHz]

# Fig.4

**différence avec/sans coupure**

Fréquence [kHz]

# Fig.5

EP 1 738 886 A1

Fig.6

# Fig.7

**Office européen**

**des brevets**

**RAPPORT DE RECHERCHE EUROPEENNE**

Numéro de la demande

EP 05 01 3776

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | PATENT ABSTRACTS OF JAPAN vol. 1998, no. 12, 31 octobre 1998 (1998-10-31) & JP 10 180607 A (NIPPEI TOYAMA CORP), 7 juillet 1998 (1998-07-07) | 6,8 | B28D5/04 B28D1/08 B28D1/10 B23D57/00 |
| A | * le document en entier * | 1-5,7, 9-11 | |
| | ----- | | |
| A | PATENT ABSTRACTS OF JAPAN vol. 1995, no. 11, 26 décembre 1995 (1995-12-26) & JP 07 205015 A (TOKYO SEIMITSU CO LTD), 8 août 1995 (1995-08-08) * le document en entier * | 1,2,6,7 | |
| | ----- | | |
| A | PATENT ABSTRACTS OF JAPAN vol. 2003, no. 12, 5 décembre 2003 (2003-12-05) & JP 2004 114249 A (ISHII HYOKI CORP; TAKIZAWA TEKKOSHO:KK), 15 avril 2004 (2004-04-15) * abrégé * | 1,6 | |
| | ----- | | **DOMAINES TECHNIQUES RECHERCHES (Int.Cl.7)** |
| A | US 5 874 678 A (YAMAMOTO ET AL) 23 février 1999 (1999-02-23) * abrégé * | 1,6 | B28D B23D G01N |
| | ----- | | |

Le présent rapport a été établi pour toutes les revendications

| Lieu de la recherche | Date d'achèvement de la recherche | Examinateur |
|---|---|---|
| Munich | 7 novembre 2005 | Filipas, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 05 01 3776

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-11-2005

| Document brevet cité au rapport de recherche | | Date de publication | Membre(s) de la famille de brevet(s) | | Date de publication |
|---|---|---|---|---|---|
| JP 10180607 | A | 07-07-1998 | JP | 3265208 B2 | 11-03-2002 |
| JP 07205015 | A | 08-08-1995 | AUCUN | | |
| JP 2004114249 | A | 15-04-2004 | AUCUN | | |
| US 5874678 | A | 23-02-1999 | CH | 693785 A5 | 13-02-2004 |
| | | | DE | 19728975 A1 | 29-01-1998 |
| | | | GB | 2315556 A | 04-02-1998 |
| | | | JP | 3106294 B2 | 06-11-2000 |
| | | | JP | 10034515 A | 10-02-1998 |
| | | | KR | 258439 B1 | 01-12-2000 |

EPO FORM P0460

Pour tout renseignement concernant cette annexe : voir Journal Officiel de l'Office européen des brevets, No.12/82